(19) Europäisches Patentamt
European Patent Office
Office européen des brevets

(11) Veröffentlichungsnummer: **0 063 713**
**A1**

# (12) EUROPÄISCHE PATENTANMELDUNG

(21) Anmeldenummer: 82102805.7

(22) Anmeldetag: 02.04.82

(51) Int. Cl.³: **C 09 B 1/20**, C 09 B 1/50, C 09 B 1/54, C 09 K 3/34, G 02 F 1/137

(30) Priorität: 18.04.81 DE 3115762

(43) Veröffentlichungstag der Anmeldung: 03.11.82 Patentblatt 82/44

(84) Benannte Vertragsstaaten: AT CH DE FR GB IT LI NL

(71) Anmelder: Merck Patent Gesellschaft mit beschränkter Haftung, Frankfurter Strasse 250, D-6100 Darmstadt (DE)

(72) Erfinder: Eidenschink, Rudolf, Dr., Erlenweg 17, D-6110 Dieburg (DE)
Erfinder: Krause, Joachim, Dr., Samuel-Morse-Strasse 14, D-6110 Dieburg (DE)
Erfinder: Weber, Georg, Wilhelm-Leuschner-Strasse 38, D-6106 Erzhausen (DE)

(54) **Dichroitische Anthrachinonfarbstoffe, diese enthaltende flüssigkristalline Dielektrika und elektrooptisches Anzeigeelement.**

(57) Pleochroitische Anthrachinonfarbstoffe der Formel (I)

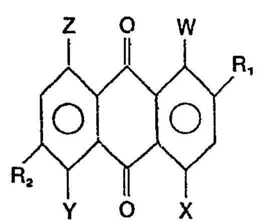

(I)

worin

W, X, Y und Z Wasserstoff, $NH_2$, OH, $NHCH_3$ oder $NHC_2H_5$ bedeuten, wobei jedoch nicht mehr als 3 dieser Substituenten untereinander gleich sind, $R_1$ 4-($R_3$)-Phenyl, wenn $R_2$ H, Alkyl oder Alkoxy mit jeweils bis zu 8 C-Atomen, CN oder 4-($R_3$)-Phenyl ist, und 4-Alkylcyclohexyl oder 4-Alkoxyphenyl, wenn $R_2$ Alkyl oder Alkoxy mit jeweils bis zu 8 C-Atomen ist, bedeutet, und $R_3$ Alkyl oder Alkoxy mit bis zu 8 C-Atomen ist, worin die Kohlenstoffkette 1-, 2- oder 3mal durch einander nicht benachbarte Sauerstoffatome unterbrochen ist,

sind zur Dotierung flüssigkristalliner Dielektrika für elektrooptische Anzeigeelemente auf der Basis des Guest-Host-Effekts geeignet. Sie weisen gute dichroitische Verhältniswerte auf und sind in den gebräuchlichen flüssigkristallinen Basismaterialien ausreichend löslich.

EP 0 063 713 A1

Dichroitische Anthrachinonfarbstoffe, diese enthaltende flüssigkristalline Dielektrika und elektrooptisches Anzeigeelement

Die Erfindung betrifft neue dichroitische Anthrachinonfarbstoffe, die zur Verwendung als Komponenten flüssigkristalliner Dielektrika für elektrooptische Anzeigeelemente auf der Basis des Guest-Host-Effekts bestimmt sind.

Bei elektrooptischen Anzeigeelementen mit flüssigkristallinen Dielektrika ist es bekannt, den elektrooptischen Effekt der Anzeige durch Einlagerung von dichroitischen oder pleochroitischen Farbstoffen als sogenannte "Gast-Phase" in einer flüssigkristallinen Matrix als sogenannte "Wirt-Phase" zu erzeugen (G.H. Heilmeier et al, Molecular Crystals and Liquid Crystals, Band 8 (1969), Seiten 293-304). Die Farbstoffmoleküle der Gast-Phase werden hierbei von der einbettenden Wirt-Phase, in der sie gelöst bzw. verteilt sind, entsprechend dem anliegenden elektrischen Feld orientiert und zeigen wegen ihrer pleochroitischen Eigenschaften je nach Orientierung eine unterschiedliche Lichtabsorption. Im Unterschied zu normalen monochroitischen Farbstoffen hängt die von pleochroitischen Farbstoffen absorbierte Lichtmenge von der Orientierung ihrer Moleküle zum elektrischen Feldvektor des einfallenden Lichtes ab. Durch Anlegen eines elektrischen Feldes an das in einer Zelle als dünne Schicht verteilte Dielektrikum werden die nematischen Flüssigkristalle der Wirt-Phase und zusammen mit diesen die als Gast-Phase eingelagerten pleochroitischen Farbstoffe umorientiert, was zu einer Änderung der Lichtabsorption führt. Die praktische Anwendung dieser in der Literatur als Guest-Host-Effekt bezeichneten Technik ist z. B. in der DE-OS 1 928 003 beschrieben. Als Beispiele von pleochroitischen bzw. dichroitischen Farbstoffen sind dort Indophenolblau, Indigoderivate, Azofarbstoffe und dergleichen beschrieben. Die dabei erzielbaren Kontraste sind nur bei Verwendung einer Polarisationsfolie für eine gute Lesbarkeit ausreichend.

Gemäß einer neueren Entwicklung, wie sie z. B. in der DE-OS 2 410 557 beschrieben ist, kann auf Polarisatoren verzichtet werden, wenn dem aus nematischen Flüssigkristallen mit positiver dielektrischer Anisotropie (als Wirt-Phase) und darin (als Gast-Phase) eingelagertem pleochroitischem Farbstoff zusammengesetzten Dielektrikum eine geringe Menge, z. B. 0,1-15 Gew.% eines optisch aktiven Materials zugesetzt wird, das im Flüssigkristall die Ausbildung einer schraubenförmigen Struktur (cholesterisch Struktur) bewirkt. Beispiele solcher Zusammensetzungen sowie die physikalischen Grundlagen der Lichtabsorption darin sind in der Arbeit von D. L. White und G. N. Taylor mit dem Titel "New Absorptive Mode Reflective Liquid Crystal Display Device" (J. Appl. Physics, Band 45 (1974), Seiten 4718-4723) beschrieben. Beispiele für Aufbau und Betrieb elektrooptischer Anzeigeelemente auf der Basis dieses Effekts sind in den DE-OS 2 639 675 und 2 658 568 beschrieben.

In der Literatur werden die Flüssigkristall-Anzeigeelemente mit cholesterisch orientierter Wirt-Phase und darin eingebettetem Farbstoff als Gast-Phase vielfach als Cholesteric Guest-Host-Displays bezeichnet. Diese CGH-Anzeigeelemente haben sich als vorteilhaft erwiesen, weil sie ohne Polarisationsfolien einen guten Anzeigekontrast liefern und zudem eine größere Helligkeit der abgebildeten Zeichen aufweisen.

Es hat sich gezeigt, daß die Auswahl geeigneter Farbstoffe für CGH-Anzeigeelemente sehr schwierig ist: Zunächst müssen die dichroitischen Verhältniswerte solcher Systeme mit Wirt-Phase und darin eingebettetem Farbstoff als Gast-Phase genügend groß sein, um der Anzeigezelle eine ausreichende Helligkeit und ein ausreichendes Kontrastverhältnis zu verleihen. Dabei hängt der erzielbare Kontrast vom Ordnungsgrad S des Farbstoffes in der flüssigkristallinen Matrix ab. Für den Ordnungsgrad gilt die Beziehung

$$S = \frac{1}{2} \cdot < 3 \cos^2 \theta - 1 > = \frac{E_{II} - E_{I}}{E_{II} + 2E_{I}}$$

worin θ den Winkel zwischen der Moleküllängsachse des Farbstoffmoleküls und der optischen Achse des Flüssigkristalls ist; $E_{II}$ und $E_{I}$ sind die Werte der Extinktion des Anzeigeelements, wenn die Messungen bei paralleler Orientierung ($E_{II}$) bzw. senkrechter Orientierung ($E_{I}$) der Flüssigkristallmoleküle vorgenommen werden.

Ein für die alltägliche Praxis leichter zu handhabender Wert, der eine Aussage über den Ordnungsgrad S und damit über die technische Brauchbarkeit einer Farbstoff-Flüssigkristall-Kombination erlaubt, ist das sogenannte dichroitische Verhältnis V, das den Quotienten aus den vorstehend definierten Extinktionswerten darstellt:

$$V = \frac{E_{II}}{E_{I}}$$

In technisch brauchbaren Farbstoff-Flüssigkristall-Kombinationen liegt der Wert von V bei 5 oder darüber.

Praktisch hängt der Ordnungsgrad eines Farbstoffs in erster Linie von seiner chemischen Struktur sowie von der Natur der flüssigkristallinen Matrix ab. Eine Anzahl von Beispielen hierfür ist von R. I. Cox in "Molecular Crystals and Liquid Crystals, Band 55 (1979), Seiten 1-33" beschrieben.

Außer dem Ordnungsgrad bzw. dem dichroitischen Verhältnis sind aber für die Verwendung eines Farbstoffes in CGH-Anzeigeelementen noch andere Parameter wichtig: ein Absorptionsmaximum des Farbstoffes muß im Bereich der sichtbaren Wellenlängen, d. h. zwischen 400 und 700 nm liegen und der Farbstoff muß in der dotierten Wirt-Phase bis zu einer Temperatur von etwa 100 °C beständig gegen Wechselspannungen von bis zu 20 V, gegen Strahlung im infraroten, sichtbaren und ultravioletten Bereich und gegen die Komponenten der flüssigkristallinen Wirt-Phase sein. Ferner sind eine gute Löslichkeit in der Wirt-Phase und eine hohe optische Dichte wünschenswert.

Die bisher für CGH-Anzeigeelemente vorgeschlagenen Farbstoffe erfüllen diese Anforderungen aber nicht in ausreichendem Maße. Insbesondere haben sich die in bezug auf das dichroitische Verhältnis und das Absorptionsmaximum an sich zweckmäßigen und zur Verwendung in CGH-Anzeigeelementen meist vorgeschlagenen Azofarbstoffe als ungenügend beständig gegen Licht bzw. Ultraviolett-Strahlung (zu geringe fotochemische Stabilität) und zum Teil auch als chemisch unbeständig erwiesen. Andererseits ist die im Vergleich zu Azofarbstoffen allgemein höhere fotochemische und chemische Stabilität von Anthrachinon-Farbstoffen bekannt und tatsächlich wurden in der Literatur auch Vorschläge zur Verwendung von Anthrachinon-Farbstoffen für CGH-Anzeigeelemente gemacht. Die meisten der bisher vorgeschlagenen Anthrachinon-Farbstoffe haben aber ein zu kleines dichroitisches Verhältnis V, um technisch einsetzbare CGH-Anzeigeelemente zu ermöglichen.

In der offengelegten britischen Patentanmeldung Nr. 20 11 940 werden substituierte Anthrachinonfarbstoffe der Formel (A) beschrieben,

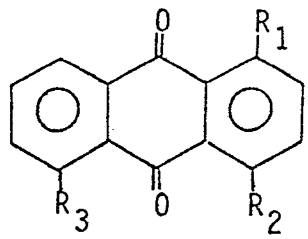

(A)

worin $R_1$ eine gegebenenfalls im Ring substituierte, über das Stickstoffatom gebundene Anilingruppe, $R_2$ H oder OH und $R_3$ H oder, wenn $R_2$ H ist, ebenfalls eine gegebenenfalls substituierte Anilingruppe bedeutet. Das dichroitische Verhältnis dieser Anthrachinonfarbstoffe, gemessen in handelsüblichen Cyanobiphenyl/Cyanoterphenyl-Flüssigkristallmischungen, liegt zwischen 3,8 und 8,4, wobei die meisten Werte zwischen 5 und 6 liegen. Durch die Anilingruppen wird jedoch die Löslichkeit der Farbstoffe in den meisten gebräuchlichen flüssigkristallinen Wirt-Phasen verringert. Insbesondere in den heute in großem Umfang verwendeten flüssigkristallinen Basis-Materialien aus der Klasse der Phenylcyclohexane ist die Löslichkeit dieser Farbstoffe der Formel (A) für die Bedürfnisse der Praxis zu gering.

Der Erfindung liegt die Aufgabe zugrunde, dichroitische Farbstoffe zur Verfügung zu stellen, die in den handelsüblichen flüssigkristallinen Basismaterialien ausreichend gut löslich sind, zum Beispiel zu einer Mindestkonzentration von 0,5 Gew.%. Darüberhinaus sollen diese Farbstoffe ein dichroitisches Verhältnis von wenigstens $V \geqq 5$ haben und chemisch und photochemisch weitestgehend beständig sein.

Es wurde nun gefunden, daß die Anthrachinonfarbstoffe der Formel (I)

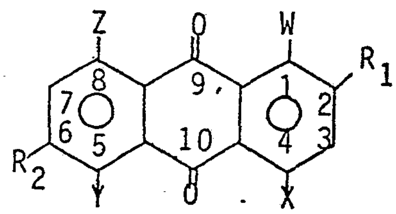

(I)

worin

W, X, Y und Z Wasserstoff, $NH_2$, OH, $NHCH_3$ oder $NHC_2H_5$ bedeuten, wobei jedoch höchstens 3 dieser Gruppen untereinander gleich sind,

$R_1$ 4-($R_3$)-Phenyl, wenn $R_2$ H, Alkyl oder Alkoxy mit jeweils bis zu 8 C-Atomen, CN oder 4-($R_3$)-Phenyl ist, und 4-Alkylcyclohexyl oder 4-Alkoxyphenyl, wenn $R_2$ Alkyl oder Alkoxy mit jeweils bis zu 8 C-Atomen ist, bedeutet, und $R_3$ Alkyl oder Alkoxy mit bis zu 8 C-Atomen ist, worin die Kohlenstoffkette 1-, 2- oder 3-mal durch einander nicht benachbarte Sauerstoffatome unterbrochen ist,

überraschend gut in den gebräuchlichen flüssigkristallinen Basismaterialien löslich sind und darin gute dichroitische Verhältniswerte aufweisen.

Gegenstand der Erfindung sind daher die neuen Anthrachinonfarbstoffe der Formel (I) und ihre Verwendung als Komponente flüssigkristalliner Dielektrika. Gegenstand der Erfindung ist weiterhin ein flüssigkristallines Dielektrikum mit einem Gehalt an einem oder mehreren dichroitischen Farbstoffen für elektrooptische Anzeigeelemente auf der Basis des Guest-Host-Effekts, das mindestens einen Anthrachinonfarbstoff der Formel (I) enthält; ferner ist Gegenstand der Erfindung ein elektrooptisches Anzeigeelement auf der Basis Guest-Host-Flüssigkristallzelle, in der das flüssigkristalline Dielektrikum einen Anthrachinonfarbstoff der Formel (I) enthält.

In den Verbindungen der Formel (I) bedeuten die Substituenten W, X, Y und Z Wasserstoff, Hydroxyl, Amino, Methylamino oder Ethylamino, wobei nicht mehr als drei dieser Substituenten untereinander gleich sind. Darunter sind die Verbindungen der Formel (I) bevorzugt, die nicht mehr als zwei, vorzugsweise nur eine der stark polaren Gruppen OH oder $NH_2$ enthalten, da diese besser in den üblichen flüssigkristallinen Basismaterialien, insbesondere denen mit Phenylcyclohexanstruktur löslich sind.

Die Natur und Position dieser Substituenten W, X, Y und Z bestimmt dabei im wesentlichen die Grundfarbe des erfindungsgemäßen Farbstoffs, wobei Abstufungen durch die Reste $R_1$ und $R_2$ beeinflußt werden. Die Grundfarben für einige Substituentenkombinationen sind in der folgenden Tabelle I angegeben:

Tabelle I: Grundfarben der erfindungsgemäßen Anthrachinon-Farbstoffe bei verschiedenen Substitutionsmustern

| Substitutions-Muster Nr. | W | X | Y | Z | Farbe |
|---|---|---|---|---|---|
| 1 | $NH_2$ | $NH_2$ | H | H | violett |
| 2 | $NH_2$ | H | $NH_2$ | H | orange |
| 3 | $NH_2$ | OH | H | H | rot |
| 4 | $NHCH_3$ | OH | H | H | violett |
| 5 | $NH_2$ | OH | OH | $NH_2$ | blau |
| 6 | $NH_2$ | OH | $NH_2$ | OH | blau |
| 7 | $NH_2$ | H | H | H | gelb |
| 8 | $NH_2$ | H | H | $NH_2$ | orange |
| 9 | OH | H | H | H | gelb |
| 10 | OH | OH | H | H | orange |
| 11 | OH | H | OH | H | gelb |
| 12 | OH | H | H | OH | gelb |
| 13 | OH | $NH_2$ | $NH_2$ | OH | blau |
| 14 | OH | $NHC_2H_5$ | OH | $NHC_2H_5$ | blau |

Außer der Farbnuancierung bestimmen die Reste $R_1$ und $R_2$ in den Verbindungen der Formel I vor allem die Löslichkeit der Farbstoffe in den üblichen flüssigkristallinen Dielektrika sowie den Ordnungsgrad S.

Der Rest $R_1$ in den Verbindungen der Formel (I) stellt regelmäßig einen in 4-Stellung substituierten Phenyl- oder trans-Cyclohexylrest dar. So kann er 4-Alkylcyclohexyl oder 4-Alkoxyphenyl sein, wenn gleichzeitig $R_2$ Alkyl oder Alkoxy bedeutet. Alle Alkyl- und Alkoxygruppen in den Resten $R_1$ und $R_2$ können bis zu 8 C-Atomen enthalten; soweit sie mehr als 2 Kohlenstoffatome enthalten, können diese dabei in gerader oder verzweigter Kette angeordnet sein. Verbindungen der Formel (I) mit verzweigten Kohlenstoffketten sind häufig in den üblichen Flüssigkristallmaterialien besser löslich als solche mit unverzweigten Ketten, jedoch ist dafür der Ordnungsgrad S gelegentlich wieder niedriger. Aus diesem Grund sind unter den Verbindungen der Formel (I) diejenigen mit höchstens einer verzweigten Kohlenstoffkette bevorzugt.

Wenn $R_2$ H, CN, Alkyl oder Alkoxy bedeutet, kann $R_1$ auch ein 4-Alkoxyalkylphenylrest oder ein 4-Alkoxyalkoxyphenylrest sein. Als Alkoxyalkyl- bzw. Alkoxyalkoxyrest $R_3$ kommen beispielsweise infrage: 2-Oxapropyl, 2- oder 3-Oxa-n-butyl, 3-Oxa-n-butyloxy, 2-, 3- oder 4-Oxapentyl, 3- oder 4-Oxapentyloxy, 3-, 4- oder 5-Oxahexyloxy, 2-, 3-, 4-, 5- oder 6-Oxaheptyl, 3-, 4-, 5- oder 6-Oxaheptyloxy; 2,4-Dioxapentyl, 2,4-, 2,5- oder 3,5-Dioxahexyl, 3,5-Dioxahexyloxy, 2,4-, 2,5-, 2,6-, 3,5-, 3,6- oder 4,6-Dioxaheptyl, 3,5-, 3,6- oder 4,6-Dioxaheptyloxy, 2,4-, 2,5-, 2,6-, 2,7-, 3,5-, 3,6-, 3,7-, 4,6-, 4,7- oder 5,7-Dioxaoctyl, 3,5-, 3,6-, 3,7-, 4,6-, 4,7- oder 5,7-Dioxaoctyloxy, 2-Methoxypropyl, 2- oder 3-Methoxybutyl, 2-, 3- oder 4-Methoxypentyl, 2-Ethyl-3-oxapentyl, 2-Ethoxypentyl, 2- oder 3-Ethyl-4-oxahexyl, 2-Ethoxypentyloxy, 2-, 4-, 5- oder 7-Methyl-3,6-dioxaoctyl und 2-, 4-, 5- oder 7-Methyl-3,6-dioxa-octyloxy. Schließlich können in

den erfindungsgemäßen Verbindungen der Formel (I) auch beide Reste $R_1$ und $R_2$ 4-Alkoxyalkylphenyl oder 4-Alkoxyalkoxyphenyl bedeuten. Unter diesen Verbindungen sind diejenigen bevorzugt, in denen $R_1$ und $R_2$ gleich sind und die darin enthaltenen Substituenten $R_3$ unverzweigte Ketten enthalten.

Die Farbstoffe der Formel (I) werden auf für Anthrachinonfarbstoffe übliche Weise hergestellt. Ein bevorzugtes Syntheseverfahren besteht in der Umsetzung eines substituierten Phthalsäureanhydrid-Derivats der Formel (II)

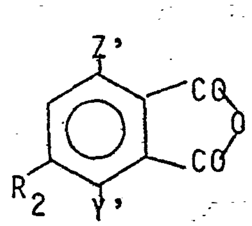

(II)

mit einem Benzolderivat der Formel (III)

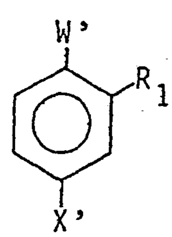

(III)

nach Art einer Friedel-Crafts-Reaktion in Gegenwart eines sauren Katalysators. In den Formeln (II) und (III) haben $R_1$ und $R_2$ die bei der Formel (I) angegebene Bedeutung; W', X', Y' und Z' habe die gleiche Bedeutung wie W, X, Y und Z oder stellen durch einfache Reaktionsschritte in diese Gruppen überführbare Substituenten dar. Die Reaktionsbedinungen für die Friedel-Crafts-Reaktion (Lösungsmittel, Katalysator, Temperatur, Dauer) werden in Analogie zu literaturbekannten Herstellungsverfahren konstitutionell ähnlicher Anthrachinonfarbstoffe, abhängig von der Struktur und Reaktivität der Ausgangsmaterialien, ausgewählt. Die Ausgangsmaterialien sind in der Regel bekannt oder können ohne Schwierigkeiten in Analogie zu den bekannten nach Standardverfahren der Synthetischen Organischen Chemie hergestellt werden.

Weiterhin können erfindungsgemäße Farbstoffe der Formel (I) durch in dieser Verbindungsklasse übliche Substitutions-, Reduktions-, Oxidations- oder Umlagerungsreaktionen synthetisiert werden, wie sie beispielsweise in O. Bayer, Chinone, Teil III, in Houben-Weyl-Müller, Methoden der Organischen Chemie, Band VII/3 c, Georg-Thieme-Verlag Stuttgart, 4. Auflage 1979 ausführlich beschrieben sind.

Die erfindungsgemäßen Dielektrika bestehen aus 2 bis 15, vorzugsweise 3 bis 12 Komponenten, darunter mindestens einem Anthrachinonfarbstoff der Formel (I). Die anderen Bestandteile werden ausgewählt aus den nematischen oder nematogenen Substanzen aus den Klassen der Azoxybenzole, Benzylidenaniline, Biphenyle, Terphenyle, Phenyl- oder Cyclohexylbenzoate, Cyclohexancarbonsäure-phenyl- oder -cyclohexylester, Phenylcyclohexane, Cyclohexylbiphenyle, Cyclohexylcyclohexane, Cyclohexylnaphthaline, 1,4-Biscyclohexylbenzole, 4,4'-Bis-cyclohexylbiphenyle, Phenyl- oder Cyclohexyl-pyrimidine, Phenyl- oder Cyclohexyldioxane, ggf. halogenierte Stilbene, Benzylphenylether, Tolane und substituierten Zimtsäuren. Die wichtigsten als Bestandteile flüssigkristalliner Wirt-Materialien infragekommenden Verbindungen lassen sich durch die Formel (IV) charakterisieren,

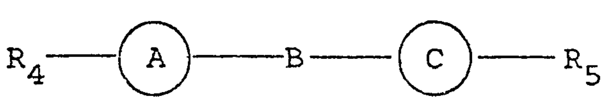

(IV)

worin A und C je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin-, Di- und Tetrahydronaphthalin, Chinazolin und Tetrahydrochinazolin gebildeten Gruppe,

| | | |
|---|---|---|
| B | -CH=CH- | -N(O)=N- |
| | -CH=CD- | -CH=N(O)- |
| | -C≡C- | $-CH_2-CH_2-$ |
| | -CO-O- | $-CH_2-O-$ |
| | -CO-S- | $CH_2-S-$ |
| | -CH=N- | -COO-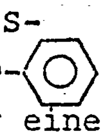-COO- |
| | -N=N- | oder eine C-C-Einfachbindung, |

D Halogen, vorzugsweise Chlor, oder -CN, und $R_4$ und $R_5$ Alkyl, Alkoxy, Alkanoyloxy oder Alkoxycarbonyloxy mit bis zu 18, vorzugsweise bis zu 8 Kohlenstoffatomen, oder einer dieser Reste auch -CN, -NC, $-NO_2$, $-CF_3$, F, Cl oder Br bedeuten. Bei den meisten dieser Verbindungen sind $R_4$ und $R_5$ voneinander verschieden, wobei einer dieser Reste meist eine Alkyl- oder Alkoxygruppe ist. Aber auch andere Varianten der vorgesehenen Substituenten sind gebräuchlich. Viele solcher Substanzen oder auch Gemische davon sind im Handel erhältlich.

Die erfindungsgemäßen Dielektrika enthalten in der Regel 0,1 bis 15, vozugsweise 0,5 bis 10, insbesondere 1-5 Gewichtsprozent einer oder mehrerer Verbindungen der Formel (I). Die Herstellung der erfindungsgemäßen Dielektrika erfolgt in an sich üblicher Weise. In der Regel wird die

gewünschte Menge der in geringerer Menge verwendeten Komponenten in der den Hauptbestandteil ausmachenden Komponente gelöst, zweckmäßig bei erhöhter Temperatur. Wenn dabei eine Temperatur oberhalb des Klärpunkts des Hauptbestandteils gewählt wird, kann die Vollständigkeit des Lösevorgangs besonders leicht beobachtet werden.

Durch geeignete Zusätze können die flüssigkristallinen Dielektrika nach der Erfindung so modifiziert werden, daß sie in allen bisher bekannt gewordenen Arten von Guest-Host-Anzeigeelementen verwendet werden können. Derartige Zusätze sind dem Fachmann bekannt und sind in der einschlägigen Literatur ausführlich beschrieben. Beispielsweise können Substanzen zur Veränderung der dielektrischen Anisotropie, der Viskosität, der Leitfähigkeit und/oder der Orientierung der nematischen Phasen zugesetzt werden. Derartige Substanzen sind zum Beispiel in den DE-OS 22 09 127, 22 40 864, 23 21 632, 23 38 281 und 24 50 088 beschrieben.

Die folgenden Beispiele sollen die Erfindung erläutern, ohne sie zu begrenzen. In den Beispielen bedeuten F. den Schmelzpunkt und K. den Klärpunkt einer flüssigkristallinen Substanz in Grad Celsius; Siedetemperaturen sind mit Kp. bezeichnet. Wenn nichts anderes angegeben ist, bedeuten Angaben von Teilen oder Prozent Gewichtsteile bzw. Gewichtsprozent.

Beispiel 1

12 g 1,5-Dihydroxy-4,8-dinitro-anthrachinon werden unter Rühren in einer Lösung aus 170 g 96 %iger Schwefelsäure und 20,0 g Borsäure gelöst. Die erhaltene Lösung wird auf 0 °C abgekühlt und mit 20,0 g 3-Oxapentyloxybenzol versetzt. Nach 4 Stunden intensivem Rühren bei dieser Temperatur wird auf 400 g Eis geschüttet. Das nach dem Schmelzen des Eises entstandene Gemenge wird über Nacht zum Sieden erhitzt und dann filtriert. Der neutral gewaschene Rückstand wird in eine aus 50 g Natriumsulfid und 300 ml Wasser hergestellten Lösung gebracht, das Gemisch 5 Stunden zum Sieden erhitzt und nach dem Abkühlen filtriert.

Der abfiltrierte Niederschlag wird in 100 ml 2 n Salsäure aufgenommen und die Aufschlämmung zum Sieden erhitzt. Der nach dem Filtrieren verbleibende Rückstand wird neutral gewaschen, getrocknet und durch Säulenchromatographie (Fließmittel Toluol/Methanol 9:1, Kieselgel) gereinigt.

Das als blauer Farbstoff zurückbleibende 1,5-Diamino-4,8-dihydroxy-3,7-bis-[4-(3-oxapentyloxy)-phenyl]-anthrachinon hat in Chloroformlösung ein Absorptionsmaximum bei 617 nm. In einem Flüssigkristallgemisch aus 71 % 4-(trans-4-Alkylcyclohexyl)-benzonitrilen, 15 % 4-(trans-4-Alkylcyclohexyl)-4'-cyanobiphenyl und 14 % 4-Alkyl-4''-cyanoterphenyl ist der Farbstoff zu 3,2 % löslich und hat einen Ordnungsgrad S von 0,73.

Analog werden hergestellt:
1,5-Diamino-4,8-dihydroxy-3,7-bis-[4-(3-oxapentyl)-phenyl]-anthrachinon.
1,5-Diamino-4,8-dihydroxy-3,7-bis-[4-(3-oxabutyloxy)-phenyl]-anthrachinon.

1,5-Diamino-4,8-dihydroxy-3,7-bis-[4-(3,6-dioxaoctyloxy)-phenyl]-anthrachinon,
1,5-Diamino-4,8-dihydroxy-3,7-bis-[4-(4-oxahexyloxy)-phenyl]-anthrachinon.

Beispiel 2

18,0 g 1,5-Dihydroxy-4,8-dinitro-2-methylanthrachinon werden unter Rühren in einer Lösung aus 200 g 96 %iger Schwefelsäure und 28 g Borsäure gelöst und analog Beispiel 1 mit 3-Oxapentyloxybenzol umgesetzt. Nach Aufarbeitung wie in Beispiel 1 beschrieben wird 1,5-Diamino-4,8-dihydroxy-3-[4-(3-oxapentyloxy)-phenyl]-7-methylanthrachinon als blauer Farbstoff (Absorptionsmaximum in Chloroform bei 615 nm) isoliert. Dieser Farbstoff ist in dem in Beispiel 1 genannten Flüssigkristallgemisch zu 3,7 % löslich und hat einen Ordnungsgrad S von 0,68.

Analog werden hergestellt:
1,5-Diamino-4,8-dihydroxy-3-[4-(4-oxaheptyloxy)-phenyl]-7-methylanthrachinon.
1,5-Diamino-4,8-dihydroxy-3-(4-n-butyloxyphenyl)-7-ethylanthrachinon.
1,5-Diamino-4,8-dihydroxy-3-(4-n-hexyloxyphenyl)-7-isopropylanthrachinon.

Beispiel 3

15,0 g 1,5-Dihydroxy-4,8-diamino-anthrachinon-2,6-disulfonsäure werden bei 85 ° in eine Lösung von 7,5 g Borsäure in 120 ml 96 %iger Schwefelsäure gegeben. Anschließend wird das Gemisch auf 0 °C abgekühlt und nach Zusatz von 11,6 g 3-Oxapentyloxybenzol 3 Stunden bei dieser Temperatur gerührt. Das Reaktionsgemisch wird in 500 ml Wasser gegossen und das erhaltene Gemisch 3 Stunden zum Sieden erhitzt. Nach dem Abkühlen wird der violette Niederschlag abfiltriert, mit Wasser gewaschen und in 100 ml 15 %iger Ammoniaklösung gelöst. Zur Lösung werden 9,0 g Natriumdithionit gegeben und das Reaktionsgemisch bei 95 ° 2 Stunden gerührt. Das ausgefallene 1,5-Dihydroxy-4,8-diamino-3-[4-(3-oxapentyloxy)-phenyl]-anthrachinon wird abfiltriert und aus Ethanol umkristallisiert; Absorptionsmaximum in Chloroform 615 nm. In dem in Beispiel 1 angegebenen Flüssigkristallgemisch sind 4,1 Gewichtsprozent löslich; der Ordnungsgrad S in d er Lösung beträgt 0,71.

Beispiel 4

Zu einer Suspension von 70 g Aluminiumchlorid in 600 ml Dichlormethan wird bei -5 ° unter Rühren eine Lösung von 81 g 4-Methylphthalsäureanhydrid in 200 ml Dichlormethan gegeben und dann langsam im Lauf von 2 Stunden eine Lösung von 101 g trans-4-n-Propyl-1-phenylcyclohexan in 200 ml Dichlormethan zugetropft, wobei die Temperatur auf -5 ° gehalten wird. Anschließend wird das Reaktionsgemisch noch 2 Stunden gerührt, wobei die Temperatur auf Zimmertemperatur ansteigt. Danach wird das Reaktionsgemisch in 4 l mit Salzsäure angesäuertes Eiswasser eingerührt, die organische Phase abgetrennt und die wäßrige noch zweimal mit je 300 ml Dichlormethan extrahiert. Die vereinigten organischen Phasen werden über Calciumchlorid getrocknet und

eingedampft. Der Rückstand wird aus Ethanol umkristallisiert, dabei werden 95 g 2-[4-(trans-4-n-Propylcyclohexyl)-benzoyl]-4-methylbenzoesäure erhalten. Das gut getrocknete Produkt wird mit 50 g Diphosphorpentoxid fein verrieben und das Gemisch 2 Stunden auf 160-180 ° erhitzt. Nach dem Abkühlen wird die erhaltene Schmelze fein zerrieben und mit 250 ml Toluol bei Siedehitze extrahiert. Die erhaltene Toluollösung wird über eine Kieselgelsäule chromatografisch gereinigt und eingedampft. Das zurückbleibende 2-(trans-4-n-Propylcyclohexyl)-6-methylanthrachinon wird in ein Gemisch aus 90 ml 96 %iger Schwefelsäure und 40 ml rauchender Salpetersäure eingetragen und darin 1,5 Stunden bei 45 ° gerührt. Das Reaktionsgemisch wird in 800 ml Eiswasser eingerührt und daraus das erhaltene 1,5-Dinitro-2-(trans-4-n-propylcyclohexyl)-6-methylanthrachinon durch Ausschütteln mit Chloroform abgetrennt. Nach Abdampfen des Lösungsmittels wird der Rückstand in einer Lösung von 120 g Natriumsulfid in 500 ml Wasser und 200 ml Ethanol 5 Stunden zum Sieden erhitzt; anschließend wird das Ethanol abdestilliert, die wäßrige Reaktionsmischung auf 0 ° abgekühlt und das gelbe feinkristalline 1,5-Diamino-3-(trans-4-n-propylcyclohexyl)-6-methylanthrachinon abfiltriert; Absorptionsmaximum in Chloroform 500 nm; Löslichkeit in dem in Beispiel 1 angegebenen Flüssigkristallgemisch 4,7 %, Ordnungsgrad 0,58.

Analog werden hergestellt:

1,5-Diamino-2-(trans-4-n-pentylcyclohexyl)-6-methylanthrachinon,

1,5-Diamino-2-(trans-4-n-heptylcyclohexyl)-6-meth oxyanthrachinon,

1,5-Diamino-2-(trans-4-n-butylcyclohexyl)-6-n-butylanthrachinon,

1,5-Diamino-2-(trans-4-ethylcyclohexyl)-6-n-pentylanthrachinon.

Beispiel 5

Zu einer Lösung von 7,5 g 1,5-Diamino-2-(trans-4-n-propylcyclohexyl)-6-methylanthrachinon in 100 ml 15 %iger Schwefelsäure wird bei 5 $^{O}$ eine Lösung von 2,5 g Natriumnitrit in 20 ml Wasser getropft. Das Reaktionsgemisch wird 2 Stunden zum Sieden erhitzt. Nach dem Abkühlen wird das gebildete 1,5-Dihydroxy-2-(trans-4-n-propylcyclohexyl)-6-methylanthrachinon mit Chloroform extrahiert, die organische Phase über Calciumchlorid getrocknet, eingedampft und der zurückbleibende gelbe Farbstoff aus Ethanol umkristallisiert; Absorptionsmaximum in Chloroform 437 nm, Löslichkeit in dem Flüssigkristallgemisch gemäß Beispiel 1 3,4 %, Ordnungsgrad S = 0,65.

Analog werden hergestellt:
1,5-Dihydroxy-2-(trans-4-n-pentylcyclohexyl)-6-methylanthrachinon,
1,5-Dihydroxy-2-(trans-4-n-butylcyclohexyl)-6-n-butylanthrachinon,
1,5-Dihydroxy-2-(trans-4-ethylcyclohexyl)-6-n-pentylanthrachinon.

Beispiel 6

5 g 1,5-Dihydroxy-2-(trans-4-n-propylcyclohexyl)-6-methylanthrachinon werden bei 50 $^{O}$ in einer Lösung von 5 g Borsäure in 50 ml 96 %iger Schwefelsäure unter Rühren gelöst und bei dieser Temperatur 2 Stunden gerührt. Anschließend wird auf 15 $^{O}$ abgekühlt und 3 ml 65 %ige Salpetersäure zugegeben. Das Reaktionsgemisch wird 3 Stunden bei Raumtemperatur gerührt und dann in 250 ml Eiswasser gegossen. Das abfiltrierte 1,5-Dihydroxy-4,8-dinitro-2-(trans-4-n-propylcyclohexyl)-6-methylanthrachinon wird in einer Lösung von 25 g Natriumsulfid in 100 ml Wasser

0063713

5 Stunden zum Sieden erhitzt. Das so erhaltene 1,5-Dihydroxy-4,8-diamino-2-(trans-4-n-propylcyclohexyl)-6-methylanthrachinon wird in wenig Toluol gelöst und durch Chromatographie über Kieselgel (Eluens: Toluol) gereinigt; Absorptionsmaximum in Chloroform 616 nm; Löslichkeit in dem Flüssigkristallgemisch gemäß Beispiel 1 3,7 %, Ordnungsgrad S = 0,75.

Analog werden hergestellt:
1,5-Dihydroxy-4,8-diamino-2-(trans-4-n-pentylcyclohexyl)-6-methylanthrachinon,
1,5-Dihydroxy-4,8-diamino-2-(trans-4-n-heptylcyclohexyl)-6-methylanthrachinon,
1,5-Dihydroxy-4,8-diamino-2-(trans-4-n-butylcyclohexyl)-6-n-butylanthrachinon,
1,5-Dihydroxy-4,8-diamino-2-(trans-4-ethylcyclohexyl)-6-n-pentylanthrachinon.

0063713

Merck Patent Gesellschaft
mit beschränkter Haftung
D a r m s t a d t

## Patentansprüche

1. Pleochroitische Anthrachinonfarbstoffe der Formel (I)

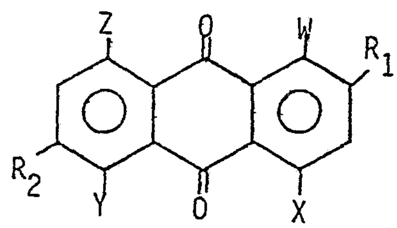

(I)

worin W, X, Y und Z Wasserstoff, $NH_2$, OH, $NHCH_3$ oder $NHC_2H_5$ bedeuten, wobei jedoch nicht mehr als 3 dieser Substituenten untereinander gleich sind, $R_1$ 4-($R_3$)-Phenyl, wenn $R_2$ H, Alkyl oder Alkoxy mit jeweils bis zu 8 C-Atomen, CN oder 4-($R_3$)-Phenyl ist, und 4-Alkylcyclohexyl oder 4-Alkoxyphenyl, wenn $R_2$ Alkyl oder Alkoxy mit jeweils bis zu 8 C-Atomen ist, bedeutet, und $R_3$ Alkyl oder Alkoxy mit bis zu 8 C-Atomen ist, worin die Kohlenstoffkette 1-, 2- oder 3-mal durch einander nicht benachbarte Sauerstoffatome unterbrochen ist.

2. Verwendung eines pleochroitischen Anthrachinonfarbstoffs der Formel (I) nach Anspruch 1 als Komponente eines flüssigkristallinen Dielektrikums.

3. Flüssigkristallines Dielektrikum enthaltend dichroitische Farbstoffe für elektrooptische Anzeigeelemente auf der Basis des Guest-Host-Effekts, dadurch gekennzeichnet, daß es mindestens einen pleochroitischen Anthrachinonfarbstoff der Formel (I) nach Anspruch 1 enthält.

4. Elektrooptisches Anzeigeelement auf der Basis einer Guest-Host-Flüssigkristallzelle, dadurch gekennzeichnet, daß die Flüssigkristallzelle ein flüssigkristallines Dielektrikum nach Anspruch 3 enthält.

Europäisches Patentamt

# EUROPÄISCHER RECHERCHENBERICHT

0063713

Nummer der Anmeldung

EP 82 10 2805

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-2 451 392 (MITSUI TOATSU) * Ansprüche 1-3; Seite 8, Farbstoff 15 - Seite 9, Farbstoff 21 * & DE - A - 3 009 940 & DE - A - 3 009 974 | 1-4 | C 09 B 1/20<br>C 09 B 1/50<br>C 09 B 1/54<br>C 09 K 3/34<br>G 02 F 1/137 |
| | --- | | |
| X | DE-A-1 807 492 (SANDOZ) * Ansprüche 1,2 * | 1 | |
| | --- | | |
| X | US-A-3 043 646 (P. BUECHELER) * Beispiele 41,42 * & DE - B - 1 144 678 | 1 | |
| | --- | | |
| X | FR-A-2 439 842 (BAYER) * Ansprüche 1,2; Beispiele 4,6,7,14,15 * & DE - A - 2 846 229 | 1 | |
| | --- | | RECHERCHIERTE SACHGEBIETE (Int. Cl. 3) |
| X | FR-A-1 431 311 (I.C.I.) * Beispiel 51; Zusammenfassung * & DE - A - 1 644 559 | 1 | C 09 B 1/00<br>C 09 K 3/00<br>G 02 F 1/00 |
| | --- | | |
| X | GB-A-2 014 600 (BAYER) * Beispiele 2,3 * & DE - A - 2 806 733 | 1 | |
| | --- | | |
| P,X | EP-A-0 038 460 (BAYER) * Ansprüche 1-10; Tabelle 3, Seite 22, Zeile 1 * | 1-4 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 04-08-1982 | DELANGHE L.L.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82